(19) Europäisches Patentamt
European Patent Office
Office européen des brevets

(11) **EP 4 765 245 A1**

(12) **EUROPEAN PATENT APPLICATION**
published in accordance with Art. 153(4) EPC

(43) Date of publication:
**24.06.2026 Bulletin 2026/26**

(21) Application number: **24865678.7**

(22) Date of filing: **29.07.2024**

(51) International Patent Classification (IPC):
$H01M\ 4/505^{(2010.01)}$  $H01M\ 4/525^{(2010.01)}$
$H01M\ 4/58^{(2010.01)}$  $H01M\ 4/36^{(2006.01)}$
$H01M\ 10/052^{(2010.01)}$  $H01M\ 4/02^{(2006.01)}$

(52) Cooperative Patent Classification (CPC):
**H01M 4/02; H01M 4/36; H01M 4/505; H01M 4/525; H01M 4/58; H01M 10/052; Y02E 60/10**

(86) International application number:
**PCT/KR2024/011042**

(87) International publication number:
**WO 2025/058235 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023 KR 20230123143**

(71) Applicant: **SK On Co., Ltd.**
**Seoul 03161 (KR)**

(72) Inventors:
• **KANG, Min Suk**
 **Daejeon 34124 (KR)**
• **BEAK, Min Cheol**
 **Daejeon 34124 (KR)**
• **DO, Ji Yae**
 **Daejeon 34124 (KR)**

(74) Representative: **Prüfer & Partner mbB**
**Patentanwälte · Rechtsanwälte**
**Sohnckestraße 12**
**81479 München (DE)**

(54) **POSITIVE ACTIVE MATERIAL FOR RECHARGEABLE LITHIUM BATTERY, AND RECHARGEABLE LITHIUM BATTERY COMPRISING SAME**

(57) A positive active material for a rechargeable lithium battery according to embodiments of the present disclosure comprises lithium metal phosphate particles containing manganese and iron, the proportion of manganese being in a predetermined range.

FIG. 1

EP 4 765 245 A1

**Description**

[TECHNICAL FIELD]

The disclosure of the present application relates to a cathode active material for a lithium secondary battery and a lithium secondary battery including the same.

[BACKGROUND ART]

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle such as an electric vehicle, an hybrid vehicle, etc.
Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.
The secondary battery may include an electrode assembly including a cathode, an anode and a separation layer (separator), and an electrolyte impregnating the electrode assembly. The secondary battery may further include an outer material of, e.g., a pouch shape for accommodating the electrode assembly and the electrolyte.
A lithium metal phosphate can be used as a cathode active material for the lithium secondary battery.
As an application scope of the lithium secondary battery expands, demands for extended life-span, higher capacity and higher energy density are increasing. However, a low ionic conductivity and energy density of the lithium metal phosphate may degrade power properties, low-temperature performance and electrode density of the lithium secondary battery.

DETAILED DESCRIPTIONS OF THE INVENTION

[Technical Objective]

According to an objective of the present disclosure, there is provided a cathode for a lithium secondary battery having improved power property and life-span property.
According to an objective of the present disclosure, there is provided a lithium secondary battery having improved power property and life-span property.

[Means for Resolving the Objective]

A cathode active material for a lithium secondary battery according to example embodiments includes a lithium metal phosphate particle the includes manganese and iron, and satisfies Formula 1 below.

$$(M_{Mn}/(M_{Mn}+M_{Fc}))*100-1 \leq \text{manganese capacity expression rate (\%)} \leq (M_{Mn}/(M_{Mn}+M_{Fc}))*100+1 \qquad \text{[Formula 1]}$$

In Formula 1, $M_{Mn}$ is a molar ratio of manganese among metals excluding lithium contained in the lithium metal phosphate particle, and $M_{Fc}$ is a molar ratio of iron among the metals excluding lithium contained in the lithium metal phosphate particle. The manganese capacity expression rate (%) is a value obtained by subtracting an SOC of a maximum height peak from 100 in a charge graph in which a state of charge (SOC) (%) is used as a horizontal axis and a value (dV/dQ) obtained by differentiating a voltage (V) by a charge capacity (mAh/g) as a vertical axis).
In some embodiments, $M_{Mn}/(M_{Mn}+M_{Fc})$ may be in a range from 0.5 to 0.7.
In some embodiments, $M_{Fc}/(M_{Mn}+M_{Fc})$ may be in a range from 0.3 to 0.5.
In some embodiments, the lithium metal phosphate particle may satisfy Formula 2 below.

$$(M_{Mn}/(M_{Mn}+M_{Fc}))*100-0.5 \leq \text{manganese capacity expression rate (\%)} \leq (M_{Mn}/(M_{Mn}+M_{Fc}))*100+0.5 \qquad \text{[Formula 2]}$$

In Formula 2, $M_{Mn}$ is a molar ratio of manganese among metals excluding lithium contained in the lithium metal phosphate particle, and $M_{Fc}$ is a molar ratio of iron among the metals excluding lithium contained in the lithium metal phosphate particle. The manganese capacity expression rate (%) is a value obtained by subtracting an SOC of a maximum height peak from 100 in a charge graph in which a state of charge (SOC) (%) is used as a horizontal axis and a value (dV/dQ) obtained by differentiating a voltage (V) by a charge capacity (mAh/g) as a vertical axis.

In some embodiments, the lithium metal phosphate particle may include a chemical structure or a crystal structure represented by Chemical Formula 1 below.

[Chemical Formula 1]    $Li_aMn_bFe_cPdO_{4+c}$

In Chemical Formula 1, $0.9 \le a \le 1.2$, $0.5 \le b \le 0.7$, $0.3 \le c \le 0.5$, $0.9 \le d \le 1.2$, and $-0.1 \le e \le 0.1$.

In some embodiments, the lithium metal phosphate particle may further include a doping element or a coating element.

In some embodiments, the doping element or the coating element may include at least one selected from the group consisting of Ti, V, Na, Mg, Ca, Y, Hf, Nb, Ta, Cr, Mo, W, Fe, Cu, Ag, Zn, B, Al, Ga, C, Si, Sn, Sr, Ba, Ra, P and Zr.

In some embodiments, a content of the doping element or the coating element may be in a range from 0.1 wt% to 1 wt% based on a weight of the lithium metal phosphate particle.

In some embodiments, the lithium metal phosphate particle may include a carbon coating formed on a surface portion.

In some embodiments, a crystallite size in a direction of a (020) plane of the lithium metal phosphate particle as measured by an X-ray diffraction (XRD) analysis may be in a range from 175 nm to 600 nm.

In some embodiments, the crystallite size may be measured using Formula 3 below:

$$[\text{Formula 3}]$$
$$L = \frac{0.9\lambda}{\beta cos\theta}$$

In Formula 3, L is the crystallite size (nm), $\lambda$ is an X-ray wavelength (nm), $\beta$ is a full width at half maximum (rad) of a (020) plane peak of the lithium metal phosphate particle, and $\theta$ is a diffraction angle (rad).

In some embodiments, the crystallite size may be in a range from 200 nm to 400 nm.

A lithium secondary battery according to example embodiments includes a cathode including the above-described cathode active material, and an anode opposing the cathode.

[Effects of the Invention]

According to an embodiment of the present disclosure, an energy density of a cathode active material can be improved.

According to an embodiment of the present disclosure, power properties, low-temperature/high-temperature properties, an initial efficiency, rate properties, and life-span properties of a lithium secondary battery may be improved.

The cathode active material for a lithium secondary battery and the lithium secondary battery of the present disclosure may be widely applied in green technology fields such as an electric vehicle, a battery charging station, a solar power generation, a wind power generation using batteries, etc. The cathode active material for a lithium secondary battery and the lithium secondary battery of the present disclosure may also be used in eco-friendly electric vehicles and hybrid vehicles for preventing climate change by suppressing air pollution and greenhouse gas emission.

[Brief Descriptions of the Drawings]

FIGS. 1 and 2 are a schematic plan view and a schematic cross-sectional view, respectively, of a lithium secondary battery according to example embodiments, respectively.

FIG. 3 is a graph showing a voltage according to a state of charge (SOC) in Examples and Comparative Examples.

FIG. 4 is a graph plotting a state of charge (SOC) as a horizontal axis and a voltage differentiated by a charge capacity (dV/dQ) as a vertical axis in Examples and Comparative Examples 1 to 3.

[Implementation for Practicing the Invention]

Embodiments of the present disclosure provide a cathode active material for a lithium secondary battery (hereinafter, abbreviated as a "cathode active material") including a lithium metal phosphate particle. Further, a lithium secondary battery (hereinafter, abbreviated as a "secondary battery") including the cathode active material for a lithium secondary battery is provided.

Hereinafter, embodiments of the present disclosure will be described in detail. However, these embodiments are merely provided as examples the present disclosure is not limited to the specific embodiments described herein.

In example embodiments, the cathode active material includes a lithium metal phosphate particle containing manganese (Mn) and iron (Fe). Accordingly, structural and chemical stability of the cathode active material may be improved while enhancing an energy density through manganese.

In some embodiments, the lithium metal phosphate particle may have an olivine structure and include a chemical structure or a crystal structure represented by Chemical Formula 1 below.

[Chemical Formula 1]   $Li_aMn_bFe_cP_dO_{4+c}$

In Chemical Formula 1, $0.9 \leq a \leq 1.2$, $0.5 \leq b \leq 0.7$, $0.3 \leq c \leq 0.5$, $0.9 \leq d \leq 1.2$, and $-0.1 \leq e \leq 0.1$.

The chemical structure or the crystal structure represented by Chemical Formula 1 represents a bonding relationships contained within the chemical structure or the crystal structure of the lithium metal phosphate particle, and does not exclude other additional elements. For example, in Chemical Formula 1, Mn and/or Fe may serve as a main active element of the cathode active material. Chemical Formula 1 is provided to express the bonding relationship of the main active elements, and is not to be understood as encompassing introduction and substitution of the additional elements.

In an embodiment, the lithium metal phosphate particle may further include auxiliary elements to enhance the chemical stability of the cathode active material or the crystal structure in addition to the main active element. The auxiliary element may be incorporated into the chemical structure or the crystal structure to form bonds, and this case is to be understood as being included within a range of the chemical structure represented by Chemical Formula 1.

The auxiliary element may include, e.g., at least one selected from the group consisting of Ti, V, Na, Mg, Ca, Y, Hf, Nb, Ta, Cr, Mo, W, Fe, Cu, Ag, Zn, B, Al, Ga, C, Si, Sn, Sr, Ba, Ra, P and Zr. The auxiliary element may also function as an auxiliary active element that may contribute to capacity/power activities of the cathode active material, e.g., together with Mn and/or Fe.

In some embodiments, the lithium metal phosphate particle may further include a coating element or a doping element. For example, elements substantially the same as or similar to the above-described auxiliary elements may be used as the coating element or the doping element. For example, the above-described elements may be used alone or in a combination of two or more therefrom.

The coating element or the doping element may be present on a surface of the lithium metal phosphate particle or may penetrate through the surface of the lithium metal phosphate particle to be incorporated into the bonding structure represented by Chemical Formula 1.

In some embodiments, a content of the doping element or the coating element may be in a range from 0.1 wt% to 1 wt% based on a weight of the lithium metal phosphate particle. In the above range, an ionic conductivity of the lithium metal phosphate particle may be enhanced, manganese dissolution may be suppressed, and structural stability may be improved.

In example embodiments, the lithium metal phosphate particle satisfies Formula 1 below.

$$(M_{Mn}/(M_{Mn}+M_{Fc}))*100-1 \leq \text{manganese capacity expression rate (\%)} \leq (M_{Mn}/(M_{Mn}+M_{Fc}))*100+1 \quad \text{[Formula 1]}$$

In Formula 1, $M_{Mn}$ is a molar ratio of manganese among metals excluding lithium contained in the lithium metal phosphate particle, and $M_{Fc}$ is a molar ratio of iron among the metals excluding lithium contained in the lithium metal phosphate particle.

In Formula 1, the manganese capacity expression rate (%) is a value obtained by subtracting an SOC of a maximum height peak (e.g., a peak having a maximum height) from 100 in a charge graph in which a state of charge (SOC) (%) is used as a horizontal axis and a value (dV/dQ) obtained by differentiating a voltage (V) by a charge capacity (mAh/g) as a vertical axis.

For example, the manganese capacity expression rate may represent an actual capacity contribution rate of manganese among manganese and iron included in the lithium metal phosphate particle.

For example, in Formula 1, $(M_{Mn}/(M_{Mn}+M_{Fc}))*100$ may represent a theoretical capacity contribution rate of manganese among manganese and iron included in the lithium metal phosphate particle.

According to Formula 1, an absolute value of a difference between a theoretical capacity contribution rate (e.g., $(M_{Mn}/(M_{Mn}+M_{Fc}))*100$ of Formula 1) and an actual capacity contribution rate (e.g., the manganese capacity expression rate) of manganese among manganese and iron included in the lithium metal phosphate particle may be 1% or less. Accordingly, the capacity expression of manganese included in the lithium metal phosphate particle may be sufficiently implemented, thereby improving an energy density of the cathode active material. Accordingly, power properties, low temperature/high temperature properties, initial efficiency, rate properties and life-span properties of a lithium secondary battery including the cathode active material may be improved.

The SOC may be a normalized value of the charge capacity of the lithium secondary battery during charging in a scale ranging from 0% to 100%.

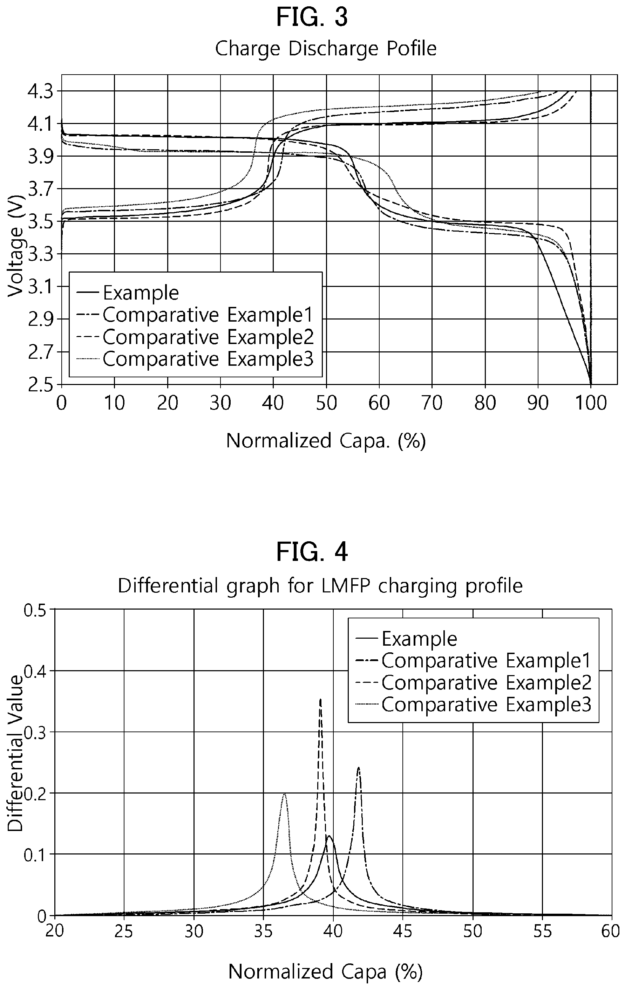

In example embodiments, after a formation charge/discharge cycle is performed on the lithium secondary battery, the lithium secondary battery is charged once, and a voltage change according to the SOC may be measured and represented as a graph (see FIG. 3).

For example, an iron-derived plateau may exist at approximately 3.5 V in the graph, and a manganese-derived plateau may exist at approximately 4.1 V. Accordingly, manganese may provide a higher charge voltage and a greater capacity contribution than those of iron.

For example, iron may be oxidized before manganese. Accordingly, the iron-derived plateau may appear at a relatively low SOC, and the manganese-derived plateau may appear at a relatively high SOC. For example, an inflection point may exist between the iron-derived plateau and the manganese-derived plateau.

For example, a differential graph may be obtained using the voltage of the graph differentiated by the charge capacity or the SOC as a vertical axis and the SOC as a horizontal axis. The SOC of the maximum height peak may represent an SOC at a point having the maximum height of the differential graph.

For example, the SOC of the maximum height peak of the differential graph may be the SOC at the inflection point of the graph. For example, the SOC of the maximum height peak may represent a point at which the oxidation of manganese initiates after the oxidation of iron.

In some embodiments, $M_{Mn}/(M_{Mn}+M_{Fc})$ in Equation 1 may be in a range from 0.5 to 0.7. In the above range, the energy density of the cathode active material may be sufficiently enhanced while improving structural and chemical stability.

In some embodiments, $M_{Fc}/(M_{Mn}+M_{Fc})$ may be in a range from 0.3 to 0.5. In the above range, the energy density of the cathode active material may be enhanced while improving structural and chemical stability. For example, $M_{Mn}$ and $M_{Fc}$ may be the same as those in in Equation 1.

In some embodiments, the lithium metal phosphate particle may satisfy Formula 2 below.

$(M_{Mn}/(M_{Mn}+M_{Fc}))*100-0.5 \leq$ manganese capacity expression rate (%) $\leq (M_{Mn}/(M_{Mn}+M_{Fc}))*100+0.5$      [Formula 2]

In Formula 2, $M_{Mn}$, $M_{Fe}$ and the manganese capacity expression rate may be the same as those defined in Formula 1.

According to Formula 2, an absolute value of a difference between a theoretical capacity contribution rate (e.g., $(M_{Mn}/(M_{Mn}+M_{Fc}))*100$ of Formula 1) and an actual capacity contribution rate (e.g., the manganese capacity expression rate) of manganese among manganese and iron included in the lithium metal phosphate particle may be 0.5% or less. Accordingly, the energy density of the cathode active material may be further enhanced, and power properties, low temperature/high temperature properties, initial efficiency, rate properties and life-span properties of the lithium secondary battery may be improved.

In some embodiments, the lithium metal phosphate particle may include a carbon coating formed on a surface portion. Accordingly, an electrical conductivity of the cathode active material may be improved, thereby enhancing the power properties.

For example, a content of the carbon coating may be 0.5 wt% to 3.0 wt% based on a total weight of the lithium metal phosphate particle. In the above range, the power properties may be sufficiently improved while suppressing deterioration of the low-temperature properties of the cathode active material.

In some embodiments, a crystallite size in a (020) plane direction of the lithium metal phosphate particle as measured by an X-ray diffraction (XRD) analysis may be in a range from 175 nm to 600 nm, and in some embodiments, from 200 nm to 400 nm. In the above range, the manganese capacity expression rate may be improved, while enhancing the structural stability of the cathode active material.

In some embodiments, the crystallite size in the (020) plane direction of the lithium metal phosphate particle may be measured using a Scherrer equation represented by Formula 3 below:

$$[\text{Formula 3}]$$

$$L = \frac{0.9\lambda}{\beta cos\theta}$$

In Formula 3, L is the crystallite size (nm), $\lambda$ is an X-ray wavelength (nm), $\beta$ is a full width at half maximum (rad) of a (020) plane peak of the lithium metal phosphate particle, and $\theta$ is a diffraction angle (rad).

In some embodiments, in Formula 3, $\beta$ may be a FWHM correcting a value derived from a device. In an embodiment, Si may be used as a standard material for reflecting the device-derived value. In this case, a FWHM profile of Si over an entire 2θ range may be fitted, and the device-derived FWHM may be expressed as a function of 2θ. Thereafter, a value obtained by subtracting and correcting the FWHM value derived from the device in the corresponding 2θ obtained from the function may be used as β.

In example embodiments, the manganese capacity expression rate of Formula 1 may be adjusted by controlling properties such as molar ratios of manganese and iron contained in lithium metal phosphate particle, addition of doping or coating elements, a carbon coating, and the crystallite size in the (020) plane direction. Additionally, the manganese capacity expression rate of Formula 1 may be controlled by adjusting process conditions such as a mixing method of a manganese source and an iron source (liquid mixing or dry mixing), performing high-temperature heat treatment before formation charging and discharging, firing temperature and time together with the above properties.

The manganese capacity expression rate of Equation 1 does not entirely depend on any one of the above-described properties and process conditions, and the lithium metal phosphate particle satisfying Formula 1 may be formed by appropriately controlling each of the above-described properties and process conditions based on the present disclosure.

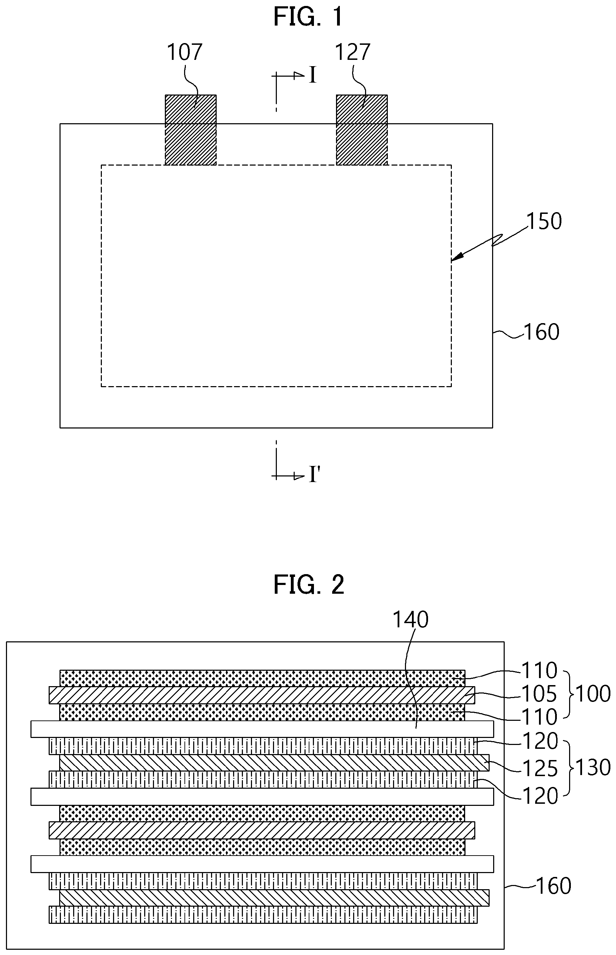

FIGS. 1 and 2 are a schematic plan view and a schematic cross-sectional view, respectively, illustrating a lithium secondary battery according to example embodiments, respectively. For example, FIG. 2 is a cross-sectional view taken along a line I-I' of FIG. 1 in a thickness direction.

The structures shown in FIGS. 1 and 2 are examples provided for convenience of descriptions, and the structure of the lithium secondary battery according to embodiments of the present disclosure is not limited thereto.

The lithium secondary battery may include a cathode 100 including the above-described cathode active material and an anode 130 facing the cathode 100.

The cathode 100 may include a cathode current collector 105 and a cathode active material layer 110 formed on at least one surface of the cathode current collector 105.

The cathode current collector 105 may include stainless steel, nickel, aluminum, titanium, or an alloy thereof. The cathode current collector 105 may include aluminum or stainless steel surface-treated with carbon, nickel, titanium, and silver. For example, a thickness of the anode current collector 105 may be in a range from 10 $\mu$m to 50 $\mu$m.

The cathode active material layer 110 may include the above-described cathode active material.

The cathode active material above may include a plurality of the lithium metal phosphate particles described above. A content of the lithium metal phosphate particles based on a total weight of the cathode active material above may be 50 wt% or more. In some embodiments, the content of the lithium metal phosphate particles based on the total weight of the cathode active material may be 60 wt% or more, 70 wt% or more, 80 wt% or more, or 90 wt% or more.

In an embodiment, the cathode active material may substantially consist of the lithium metal phosphate particles.

A cathode slurry may be prepared by mixing the cathode active material in a solvent. The cathode slurry may be coated on at least one surface of the cathode current collector 105, and then dried and pressed to prepare the cathode active material layer 110. The coating may include a gravure coating, a slot die coating, a multi-layer simultaneous die coating, an imprinting, a doctor blade coating, a dip coating, a bar coating, a casting, or the like. The cathode active material layer 110 may further include a binder, and may optionally further include a conductive material, a thickener, or the like.

N-methyl-2-pyrrolidone (NMP), dimethylformamide, dimethylacetamide, N,N-dimethylaminopropylamine, ethylene oxide, tetrahydrofuran, or the like, may be used as the solvent.

The binder may include polyvinylidene fluoride (PVDF), vinylidene fluoride-hexafluoropropylene copolymer (poly(vinylidene fluoride-co-hexafluoropropylene), polyacrylonitrile, polymethylmethacrylate, acrylonitrile-butadiene rubber (NBR), polybutadiene rubber (BR), styrene-butadiene rubber (SBR), or the like. These may be used alone or in a combination of two or more therefrom.

In an embodiment, a PVDF-based binder may be used as a cathode binder. In this case, an amount of the binder for forming the cathode active material layer 110 may be reduced and an amount of the cathode active material may be relatively increased. Accordingly, power and capacity properties of the secondary battery may be improved.

The conductive material may be added to enhance a conductivity and/or a mobility of lithium ions or electrons of the cathode active material layer 110. For example, the conductive material may include a carbon-based conductive material such as graphite, carbon black, acetylene black, ketjen black, graphene, carbon nanotube, a vapor-grown carbon fiber (VGCF), and/or a metal-based conductive material such as tin, tin oxide, titanium oxide, a perovskite material such as $LaSrCoO_3$, $LaSrMnO_3$, or the like. These may be used alone or in a combination of two or more therefrom.

The cathode slurry may further include a thickener and/or a dispersant. In an embodiment, the cathode slurry may include a thickener such as carboxymethyl cellulose (CMC).

The anode 130 may include an anode current collector 125 and an anode active material layer 120 formed on at least one surface of the anode current collector 125.

For example, the anode current collector 125 may include a copper foil, a nickel foil, a stainless steel foil, a titanium foil, a nickel foam, a copper foam, a polymer substrate coated with a conductive metal, or the like. These may be used alone or in a combination of two or more therefrom. For example, a thickness of the anode current collector 125 may be in a range from 10 μm to 50 μm.

The anode active material layer 120 may include an anode active material. A material capable of adsorbing and de-intercalating lithium ions may be used as the anode active material. For example, a carbon-based material such as a crystalline carbon, an amorphous carbon, a carbon composite, a carbon fiber, etc., a lithium metal, a lithium alloy, a silicon (Si)-containing material, or a tin (Sn)-containing material may be used as the anode active material. These may be used alone or in a combination of two or more therefrom.

The amorphous carbon may include hard carbon, soft carbon, coke, a mesocarbon microbead (MCMB), a mesophase pitch-based carbon fiber (MPCF), etc.

The crystalline carbon may include a graphite-based carbon such as natural graphite, artificial graphite, a graphitized coke, a graphitized MCMB, a graphitized MPCF, etc.

The lithium metal may include a pure lithium metal and/or a lithium metal having a protective layer formed thereon for inhibiting dendrite growth, etc. In an embodiment, a lithium metal-containing layer deposited or coated on the anode current collector 125 may be used as the anode active material layer 120. In an embodiment, a lithium thin film layer may be used as the anode active material layer 120.

Elements included in the lithium alloy include aluminum, zinc, bismuth, cadmium, antimony, silicon, lead, tin, gallium, indium, etc. These may be used alone or in a combination of two or more therefrom.

The silicon-containing material may provide more increased capacity properties. The silicon-containing material may include Si, SiOx (0<x<2), a metal-doped SiOx (0<x<2), a silicon-carbon composite, or the like.

The metal may include lithium and/or magnesium, and the metal-doped SiOx (0<x<2) may include a metal silicate.

An anode slurry may be prepared by mixing the anode active material in a solvent. The anode slurry may be coated/deposited on the anode current collector 125, and then dried and pressed to prepare the anode active material layer 120. The coating may include a gravure coating, a slot die coating, a multi-layer simultaneous die coating, an imprinting, a doctor blade coating, a dip coating, a bar coating, a casting, etc. The anode active material layer 120 may further include a binder and may optionally further include a conductive material, a thickener, or the like.

The solvent included in the anode slurry may include water, pure water, deionized water, distilled water, ethanol, isopropanol, methanol, acetone, n-propanol, t-butanol, or the like. These may be used alone or in a combination of two or more therefrom.

The above-described materials that may be used in manufacturing the cathode 100 may be used as the binder, the conductive material and the thickener.

In some embodiments, a styrene-butadiene rubber (SBR)-based binder, carboxymethyl cellulose (CMC), a polyacrylic acid-based binder, a poly(3,4-ethylenedioxythiophene) (PEDOT)-based binder, or the like may be used as the anode binder. These may be used alone or in a combination of two or more therefrom.

In example embodiments, a separator 140 may be interposed between the cathode 100 and the anode 130. The separator 140 may be configured to prevent an electrical short circuit between the cathode 100 and the anode 130 and to generate a flow of ions. For example, a thickness of the separator may be in a range from 10 μm to 20 μm.

For example, the separator 140 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, and an ethylene/methacrylate copolymer. These may be used alone or in a combination of two or more therefrom.

The porous nonwoven fabric may contain a glass fibers with a high melting point, a polyethylene terephthalate fiber, or the like.

The separator 140 may include a ceramic-based material. For example, inorganic particles may be coated on the polymer film or dispersed in the polymer film to improve heat resistance.

The separator 140 may have a single-layered structure or a multi-layered structure including the polymer film and/or the nonwoven fabric as described above.

In example embodiments, an electrode cell may be defined by the cathode 100, the anode 130 and the separator 140, and a plurality of electrode cells may be stacked to form, e.g., a jelly roll-shaped electrode assembly 150. For example, the electrode assembly 150 may be formed by winding, stacking, zigzag-folding, stack-folding, or the like, of the separator 140.

The electrode assembly 150 may be accommodated together with an electrolyte in a case 160 to define a lithium secondary battery. In example embodiments, a non-aqueous electrolyte solution may be used as the electrolyte.

The non-aqueous electrolyte solution may include a lithium salt as an electrolyte and an organic solvent. The lithium salt may be, e.g., expressed as $Li^+X^-$, and example of an anion $(X^-)$ of the lithium salt may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, or the like.

Examples of the organic solvent include propylene carbonate (PC), ethylene carbonate (EC), butylene carbonate, diethyl carbonate (DEC), dimethyl carbonate (DMC), ethylmethyl carbonate (EMC), methylpropyl carbonate, ethylpropyl carbonate, dipropyl carbonate, vinylene carbonate, methylacetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethylsulfoxide, acetonitrile, dimethoxyethane, diethoxyethane, sulfolane, gamma-butyrolactone, and propylene sulfite, or the like. These may be used alone or in a combination of two or more therefrom.

The non-aqueous electrolyte solution may further include an additive. The additive may include, e.g., a cyclic carbonate compounds, a fluorine-substituted carbonate compounds, a sultone compound, a cyclic sulfate compound, a cyclic sulfite compound, a phosphate compounds, a borate compound, etc. These may be used alone or in a combination of two or more therefrom.

The cyclic carbonate compound may include vinylene carbonate (VC), vinyl ethylene carbonate (VEC), or the like.

The fluorine-substituted cyclic carbonate compound may include fluoroethylene carbonate (FEC), or the like.

The sultone compound may include 1,3-propane sultone, 1,3-propene sultone, 1,4-butane sultone, or the like.

The cyclic sulfate compound may include 1,2-ethylene sulfate, 1,2-propylene sulfate, or the like.

The cyclic sulfite compound may include ethylene sulfite, butylene sulfite, etc.

The phosphate-based compound may include lithium difluoro bis-oxalato phosphate, lithium difluoro phosphate, or the like.

The borate-based compound may include lithium bis(oxalate) borate, or the like.

In some embodiments, a solid electrolyte may be used instead of the above-described non-aqueous electrolyte solution. In this case, the lithium secondary battery may be manufactured in the form of an all-solid-state battery. Further, a solid electrolyte layer may be disposed between the cathode 100 and the anode 130 instead of the above-described separator 140.

The solid electrolyte may include a sulfide-based electrolyte. In a non-limiting example, the sulfide-based electrolyte may include is $Li_2S$-$P_2S_5$, $Li_2S$-$P_2S_5$-LiCl, $Li_2S$-$P_2S_5$-LiBr, $Li_2S$-$P_2S_5$-LiCl-LiBr, $Li_2S$-$P_2S_5$-Li20, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are positive numbers, Z is Ge, Zn or Ga), $Li_2S$-$GeS_2$, $Li_2S$-$SiS_2$-$Li_3PO_4$, $Li_2S$-$SiS_2$-$Li_p$-$MO_q$, (p and q are positive numbers, M is P, Si, Ge, B, Al, Ga, or In), $Li_7$-$xPS_6$-$xCl_x$ ($0 \leq x \leq 2$), $Li_7$-$xPS_6$-$xBr_x$ ($0 \leq x \leq 2$), $Li_7$-$xPS_6$-$xI_x$ ($0 \leq x \leq 2$), etc. These may be used alone or in a combination of two or more therefrom.

In an embodiment, the solid electrolyte may include an oxide-based amorphous solid electrolyte such as $Li_2O$-$B_2O_3$-$P_2O_5$, $Li_2O$-$SiO_2$, $Li_2O$-$B_2O_3$, $Li_2O$-$B_2O_3$-ZnO, etc.

As illustrated in FIG. 3, electrode tabs (a cathode tab and an anode tab) may protrude from the cathode collector 105 and the anode collector 125 included in each electrode cell and extend to one side of the case 160. The electrode tabs may be fused together with the one side of the case 160 to form electrode leads (a cathode lead 107 and an anode lead 127) that may extend or may be exposed to an outside of the case 160.

The lithium secondary battery may be manufactured in, e.g. a cylindrical shape using a can, a prismatic shape, a pouch shape, or a coin shape.

Hereinafter, embodiments of the present disclosure will be further described with reference to specific experimental examples. Examples and comparative examples included in the experimental examples provides merely examples of the present disclosure and do not limit the appended claims. It is clear to those skilled in the art that various changes and modifications to embodiments are possible within the scope of the present disclosure and technical ideas, and such changes and modifications are included in the scope of the appended claims.

Example 1

Preparation of Lithium Metal Phosphate Particles

A $MnPO_4$ powder, a $FePO_4$ powder, a $Li_2CO_3$ powder, a $TiO_2$ powder, and glucose were added to distilled water, and then mixed and ground using a ball mill by adding zirconia balls. A content of the powder was 50 wt% based on a total weight of the mixture. Amounts of $MnPO_4$ and $FePO_4$ powder were adjusted to achieve a Mn:Fe molar ratio of 6:4. An amount of $TiO_2$ powder was adjusted to achieve a Ti content of 0.5 wt% based on a total weight of the lithium metal phosphate particles. A glucose content was 10 wt% based on the total weight of the lithium metal phosphate particles.

The mixing and grinding were performed at 200 rpm for 60 minutes to prepare a slurry. The zirconia balls were removed, and the slurry was spray-dried to obtain a mixture powder.

The mixture powder was placed in a firing chamber, and nitrogen ($N_2$) gas was introduced into the chamber, and then fired at 650°C for 4 hours to obtain Ti-doped and carbon-coated preliminary lithium metal phosphate ($LiMn_{0.6}Feo_{0.4}PO_4$) particles.

The preliminary lithium metal phosphate particles were pulverized and classified using a jet mill to obtain lithium metal phosphate particles having a particle size of 1.5 $\mu$m.

Fabrication of Lithium Secondary Battery

The lithium metal phosphate particles were used as a cathode active material.

A cathode slurry was prepared by mixing the cathode active material, Denka Black as a conductive material and PVDF as a binder in a mass ratio of 93:5:2. The cathode slurry was coated on an aluminum current collector (thickness 15 $\mu$m), dried and pressed to prepare a cathode including a cathode active material layer.

A lithium metal was used as the anode active material.

The prepared cathode and anode were notched into circular shapes having diameters of $\Phi14$ and $\Phi16$, respectively, and stacked with a separator (polyethylene, thickness 13 $\mu$m) interposed between the cathode and the anode to form an electrode cell. $\Phi N$ (N is a positive number) may represent a circle having a diameter of N mm.

The electrode cell was placed in a coin cell housing having a dimension (CR2016) of a diameter of 20 mm and a height of 1.6 mm, and an electrolyte solution was injected to assemble the electrodes. The electrodes were aged for at least 12 hours so that the electrolyte solution impregnate an interior of the electrodes.

A 1M $LiPF_6$ solution prepared using a mixed solvent of EC/EMC (30/70; volume ratio) was used as the electrolyte solution.

The lithium secondary battery manufactured as described above was subjected to formation charge and discharge (charge condition CC-CV 0.1C 3.8V 0.05C CUT-OFF, discharge condition CC 0.1C 2.5V CUT-OFF).

Examples 2 to 5 and 7 to 10

A cathode active material and a lithium secondary battery were manufactured by the same method as that in Example 1, except that the amounts of the $MnPO_4$ powder and the $FePO_4$ powder were adjusted so that the molar ratio of Mn and Fe was became as shown in Table 2 below, and the amount of $TiO_2$ was adjusted so that the Ti content based on the total weight of the lithium metal phosphate particles became as shown in Table 2 below.

The chemical formula of the preliminary lithium metal phosphate particles ($LiMn_{0.6}Fe_{0.4}PO_4$ in Example 1) was changed according to the molar ratio of Mn and Fe.

Example 6

A cathode active material and a lithium secondary battery were manufactured by the same method as that in Example 1, except that the amounts of the $MnPO_4$ powder and the $FePO_4$ powder were adjusted so that the molar ratio of Mn and Fe became as shown in Table 2 below, and an equivalent amount of V was added instead of Ti.

The chemical formula of the preliminary lithium metal phosphate particles ($LiMn_{0.6}Fe_{0.4}PO_4$ in Example 1) was changed depending on the molar ratio of Mn and Fe.

Example 11

A cathode active material and a lithium secondary battery were manufactured by the same method as that in Example 1, except that the prepared $LiMn_{0.6}Fe_{0.4}PO_4$ particles were mixed with citric acid and fired at 400°C for 6 hours to form a carbon coating.

An amount of citric acid added was adjusted so that a content of the carbon coating became 2.5 wt% based on the total weight of the lithium metal phosphate particles.

Example 12

A cathode active material and a lithium secondary battery were manufactured by the same method as that in Example 1, except that the firing was performed at 500°C for 4 hours.

Example 13

A cathode active material and a lithium secondary battery were manufactured by the same method as that in Example 1, except that the firing was performed at 500°C for 6 hours.

Example 14

A cathode active material and a lithium secondary battery were manufactured by the same method as that in Example 1, except that the firing was performed at 650°C for 6 hours.

Example 15

A cathode active material and a lithium secondary battery were manufactured by the same method as that in Example 1, except that the firing was performed at 700°C for 4 hours.

Example 16

A cathode active material and a lithium secondary battery were manufactured by the same method as that in Example 1, except that the firing was performed at 480°C for 4 hours.

Example 17

A cathode active material and a lithium secondary battery were manufactured by the same method as that in Example 1, except that the firing was performed at 700°C for 5 hours.

Example 18

A cathode active material and a lithium secondary battery were manufactured by the same method as that in Example 1, except that the amounts of the $MnPO_4$ powder and the $FePO_4$ powder were adjusted so that the molar ratio of Mn and Fe became as shown in Table 2 below, the amount of $TiO_2$ was adjusted so that the Ti content based on the total weight of the lithium metal phosphate particles became as shown in Table 2 below, and the firing was performed at 700°C for 6 hours.

The chemical formula of the preliminary lithium metal phosphate particles ($LiMn_{0.6}Fe_{0.4}PO_4$ in Example 1) was changed depending on the molar ratio of Mn and Fe.

The prepared lithium secondary battery were subjected to a formation charging at 45°C, and a formation discharging was performed approximately 12 hours after lowering the chamber temperature to room temperature.

Example 19

A $NH_4H_2PO_4$ powder, a $Li_2CO_3$ powder, a glucose powder and a $TiO_2$ powder were added and mixed in an aqueous solution formed by adding and mixing a $Mn(NO_3)_2 \cdot 4H_2O$ powder and a $Fe(NO_3)_3 \cdot 9H_2O$ powder as raw materials in purified water. Amounts of $Mn(NO_3)_2 \cdot 4H_2O$ powder and $Fe(NO_3)_3 \cdot 9H_2O$ powder were adjusted so that a molar ratio of Mn and Fe became 6:4. An amount of the $TiO_2$ powder was adjusted so that a Ti content became 0.5 wt% based on the total weight of the lithium metal phosphate particles. A content of glucose based on the total weight of the lithium metal phosphate particles was 10 wt%.

The mixing was performed in a stirred reactor at 1,000 rpm for 5 hours. A precipitated solid after mixing was dried, and then placed in a firing chamber. A nitrogen ($N_2$) gas was introduced into the firing chamber, and a firing was performed at 700°C for 4 hours to obtain Ti-doped and carbon-coated preliminary lithium metal phosphate ($LiMn_{0.6}Fe_{0.4}PO_4$) particles.

The preliminary lithium metal phosphate particles were pulverized and classified using a jet mill to prepare lithium metal phosphate particles having a particle size of 1.5 $\mu$m.

A lithium secondary battery was manufactured by the same method as that in Example 1, except for the aforementioned details.

Example 20

A cathode active material and a lithium secondary battery were manufactured by the same method as that in Example 19, except that $TiO_2$ powder was not added as a raw material.

The prepared lithium secondary battery was subjected to a formation charge at 45°C, and a formation discharge was performed approximately 12 hours after cooling the chamber to room temperature.

Comparative Example 1

A cathode active material and a lithium secondary battery were manufactured by the same method as that in Example 1, except that $TiO_2$ was not added as a raw material and that the firing was performed at 680°C for 4 hours.

Comparative Example 2

A cathode active material and a lithium secondary battery were manufactured by the same method as that in Example 1, except that $TiO_2$ was not added as a raw material and that the firing was performed at 680°C for 4 hours.

Comparative Example 3

A cathode active material and a lithium secondary battery were manufactured by the same method as that in Example 1, except that the firing was performed at 650°C for 6 hours and the amount of the $TiO_2$ powder was adjusted so that the Ti content became 0.05 wt% based on the total weight of the lithium metal phosphate particles.

Comparative Example 4

A cathode active material and a lithium secondary battery were manufactured by the same method as that in Example 1, except that the firing was performed at 650°C for 15 hours and the amount of the $TiO_2$ powder was adjusted so that the Ti content became 0.2 wt% based on the total weight of the lithium metal phosphate particles.
The prepared lithium secondary battery was subjected to a formation charging at 45°C, and a formation discharging was performed approximately 12 hours after cooling the chamber to room temperature.

Experimental Example

(1) Measurement of crystallite size

Crystallite sizes of the lithium metal phosphate particles manufactured according to the above-described Examples and Comparative Examples were calculated using an XRD analysis and Equation 3.
Specific XRD analysis equipment/conditions are as shown in Table 1 below.

[Table 1]

| XRD(X-Ray Diffractometer) EMPYREAN | |
|---|---|
| Maker | PANalytical |
| Anode material | Cu |
| K-Alpha1 wavelength | 1.540598 Å |
| Generator voltage | 45 kV |
| Tube current | 40 mA |
| Scan Range | 10~120° |
| Scan Step Size | 0.0065° |
| Divergence slit | 1/4° |
| Antiscatter slit | 1/2° |

(2) Measurement of manganese capacity expression rate

A graph was obtained by measuring a voltage change according to an SOC while charging once the lithium secondary batteries manufactured according to the above-described Examples and Comparative Examples.
A differential graph was obtained using a value by differentiating the voltage of the graph by a charging capacity (dV/dQ) as a vertical axis, and the SOC (%) as a horizontal axis. An SOC at a point having a maximum height of the differential graph was set as an SOC of the maximum height peak. The SOC of the maximum height peak was subtracted from 100 to measure a manganese capacity expression rate.
The voltage change according to SOC was measured using Toyo System's TOSCAT-3100 (specification:

5V/100mA), and a capacity data for each voltage was obtained using a TOSCAT Graph program.

FIG. 3 is a graph showing a voltage according to a state of charge (SOC) in Example 1 and Comparative Examples 1 to 3.

FIG. 4 is a graph plotting a state of charge (SOC) as a horizontal axis and a voltage differentiated by a charge capacity (dV/dQ) as a vertical axis in Example 1 and Comparative Examples 1 to 3.

(3) Measurement of initial charge and discharge capacity and evaluation on initial capacity efficiency

Lithium secondary batteries manufactured according to the above-described Examples and Comparative Examples were charged (CC-CV 0.1C, 4.3V, 0.05C cut-off) in a 25°C chamber, and then a battery capacity (initial charge capacity) was measured. After discharging (CC 0.1C, 2.5V cut-off), a battery capacity (initial discharge capacity) was measured.

An initial capacity efficiency was evaluated by dividing the measured initial discharge capacity by the measured initial charge capacity and converting the result into a percentage (%).

(4) Evaluation on rate property

Lithium secondary batteries manufactured according to the above-described Examples and Comparative Examples were charged (CC-CV 0.5C, 4.3V, 0.05C cut-off) and discharged (CC 0.1C, 2.5V cut-off) at room temperature (25°C), and a discharge capacity was measured. The measured discharge capacity was evaluated as a 0.1C discharge capacity.

The lithium secondary batteries manufactured according to the above-described Examples and Comparative Examples were charged (CC-CV 0.5C, 4.3V, 0.05C cut-off) and discharged (CC 0.33C, 2.5V cut-off) at room temperature (25°C), and a discharge capacity was measured. The measured discharge capacity was evaluated as a 0.33C discharge capacity.

The lithium secondary batteries manufactured according to the above-described Examples and Comparative Examples were charged (CC-CV 0.5C, 4.3V, 0.05C cut-off) and discharged (CC 1C, 2.5V cut-off) at room temperature (25°C), and a discharge capacity was measured. The measured discharge capacity was evaluated as a 1C discharge capacity.

Lithium secondary batteries manufactured according to the above-described Examples and Comparative Examples were charged (CC-CV 0.5C, 4.3V, 0.05C cut-off) and discharged (CC 2C, 2.5V cut-off) at room temperature (25°C), and a discharge capacity was measured. The measured discharge capacity was evaluated as a 2C discharge capacity.

A ratio of the 0.33C discharge capacity to the 0.1C discharge capacity (0.33C/0.1C) (%) was calculated as a percentage by dividing the 0.33C discharge capacity by the 0.1C discharge capacity.

A ratio of the 1C discharge capacity to the 0.1C discharge capacity (1C/0.1C) (%) was calculated as a percentage by dividing the 1C discharge capacity by the 0.1C discharge capacity.

A ratio of the 2C discharge capacity to the 0.1C discharge capacity (2C/0.1C) (%) was calculated as a percentage by dividing the 2C discharge capacity by the 0.1C discharge capacity.

(5) Evaluation on low-temperature power property

The lithium secondary batteries manufactured according to the above-described Examples and Comparative Examples were charged (CC-CV 0.5C 4.3V 0.05C CUT-OFF) and discharged (CC 0.1C 2.5V CUT-OFF) at room temperature (25°C), and a discharge capacity was measured. A measured discharge capacity was evaluated as a room-temperature discharge capacity.

The lithium secondary batteries manufactured according to the above-described Examples and Comparative Examples were charged (CC-CV 0.5C 4.3V 0.05C CUT-OFF) and discharged (CC 0.1C 2.5V CUT-OFF) at low temperature (-7°C), and a discharge capacity was measured. The measured discharge capacity was evaluated as a low-temperature discharge capacity.

The low-temperature discharge capacity was divided by the room-temperature discharge capacity to calculate a low-temperature power property (%) as a percentage.

(6) Evaluation on high-temperature storage property (high-temperature capacity retention) - 60°C

The lithium secondary batteries according to the above-described Examples and Comparative Examples were stored in a 60°C chamber for 8 weeks. Thereafter, a discharge capacity was measured while charging (CC-CV 0.1C 4.3V 0.05C cut-off) and discharging (CC 0.1C 2.5V cut-off).

The discharge capacity was divided by the initial discharge capacity measured in Experimental Example (3) to calculate a percentage.

(7) Evaluation on room temperature capacity retention - 25 °C

The lithium secondary batteries according to Examples and Comparative Examples were charged (CC-CV 0.5C, 4.3V, 0.01C cut-off) and discharged (CC 0.1C, 2.5V cut-off) 50 times. A capacity retention was evaluated as a percentage of a discharge capacity at the 50th cycle divided by a discharge capacity at the 1st cycle.
The molar ratios of Mn and Fe, the contents of doping elements (Ti or V) based on the total weight of the lithium metal phosphate particles, and the crystallite sizes in a direction of a (020) plane of the above-described Examples and Comparative Examples are shown in Table 2 below.
Among the measurement and evaluation results described above, the crystallite sizes are shown in Table 2 below, and the remaining measurement and evaluation results are shown in Tables 3 and 4 below.
An absolute value of a difference between the manganese capacity expression rate and $100*M_{Mn}/(M_{Mn}+M_{Fe})$ in Formula 1 (manganese capacity expression rate difference) are shown in Table 3.

[Table 2]

| | Mn:Fe molar ratio | doping element (Ti or V) content (wt%) | crystallite size in (020) plane direction (nm) |
|---|---|---|---|
| Example 1 | 6:4 | 0.5 | 215 |
| Example 2 | 5:5 | 0.5 | 212 |
| Example 3 | 7:3 | 0.5 | 230 |
| Example 4 | 4.5:5.5 | 0.5 | 210 |
| Example 5 | 7.5:2.5 | 0.5 | 254 |
| Example 6 | 6:4 | 0.5 | 245 |
| Example 7 | 6:4 | 0.4 | 208 |
| Example 8 | 6:4 | 1.0 | 210 |
| Example 9 | 6:4 | 0.08 | 264 |
| Example 10 | 6:4 | 1.1 | 218 |
| Example 11 | 6:4 | 0.5 | 217 |
| Example 12 | 6:4 | 0.5 | 175 |
| Example 13 | 6:4 | 0.5 | 197 |
| Example 14 | 6:4 | 0.5 | 376 |
| Example 15 | 6:4 | 0.5 | 600 |
| Example 16 | 6:4 | 0.5 | 173 |
| Example 17 | 6:4 | 0.5 | 604 |
| Example 18 | 7.5:2.5 | 1.1 | 216 |
| Example 19 | 6:4 | 0.5 | 406 |
| Example 20 | 6:4 | 0 | 289 |
| Comparative Example 1 | 6:4 | 0.5 | 255 |
| Comparative Example 2 | 6.5:3.5 | 0 | 513 |
| Comparative Example 3 | 7:3 | 0 | 475 |
| Comparative Example 4 | 6:4 | 0.05 | 225 |

[Table 3]

| | manganese capacity expression rate (%) | $100*M_{Mn}/(M_{Mn}+M_{Fe})$ (%) | manganese capacity expression rate difference (%) | initial charge capacity (mAh/g) | initial discharge capacity (mAh/g) | initial efficiency (%) |
|---|---|---|---|---|---|---|
| Example 1 | 60.2 | 60 | 0.2 | 155.5 | 152.2 | 97.9 |
| Example 2 | 49.7 | 50 | 0.3 | 155.4 | 152.0 | 97.8 |
| Example 3 | 69.6 | 70 | 0.4 | 155.5 | 152.3 | 97.9 |
| Example 4 | 44.3 | 45 | 0.7 | 153.2 | 149.2 | 97.4 |
| Example 5 | 74.4 | 75 | 0.6 | 153.3 | 149.5 | 97.5 |
| Example 6 | 60.1 | 60 | 0.1 | 154.8 | 151.2 | 97.7 |
| Example 7 | 59.8 | 60 | 0.2 | 154.9 | 151.5 | 97.8 |
| Example 8 | 60.2 | 60 | 0.2 | 155.3 | 151.7 | 97.7 |
| Example 9 | 59.0 | 60 | 1.0 | 155.1 | 151.5 | 97.7 |
| Example 10 | 59.2 | 60 | 0.8 | 155.0 | 151.4 | 97.7 |
| Example 11 | 59.5 | 60 | 0.5 | 155.6 | 152.6 | 98.1 |
| Example 12 | 59.6 | 60 | 0.4 | 155.4 | 152.1 | 97.9 |
| Example 13 | 59.6 | 60 | 0.4 | 153.6 | 150.1 | 97.7 |
| Example 14 | 59.4 | 60 | 0.6 | 153.4 | 150.0 | 97.8 |
| Example 15 | 59.3 | 60 | 0.7 | 152.9 | 148.9 | 97.4 |
| Example 16 | 59.0 | 60 | 1.0 | 151.9 | 147.3 | 97.0 |
| Example 17 | 59.1 | 60 | 0.9 | 152.1 | 147.7 | 97.1 |
| Example 18 | 74.2 | 75 | 0.8 | 153.0 | 148.9 | 97.3 |
| Example 19 | 59.1 | 60 | 0.9 | 154.2 | 150.3 | 97.5 |
| Example 20 | 59.2 | 60 | 0.8 | 154.8 | 151.1 | 97.6 |
| Comparative Example 1 | 58 | 60 | 2 | 151.3 | 145.6 | 96.2 |
| Comparative Example 2 | 61 | 65 | 4 | 150.8 | 144.9 | 96.1 |
| Comparative Example 3 | 63.5 | 70 | 6.5 | 148.6 | 142.4 | 95.8 |
| Comparative Example 4 | 58.8 | 60 | 1.2 | 149.3 | 143.0 | 95.8 |

[Table 4]

| | rate property (%) | | | low temperature (-7 °C) power property (%) | high temperature (60 °C) storage property (%) | capacity retention (%, 50cyc) |
|---|---|---|---|---|---|---|
| | 0.33C/0.1C | 1C/0.1C | 2C/0.1C | | | |
| Example 1 | 98.2 | 94.9 | 92.2 | 88.7 | 96.9 | 97.5 |
| Example 2 | 98.1 | 95.0 | 92.3 | 88.9 | 96.8 | 97.5 |
| Example 3 | 98.2 | 94.8 | 92.0 | 88.8 | 96.8 | 97.4 |
| Example 4 | 97.5 | 94.4 | 91.3 | 86.9 | 95.2 | 96.7 |
| Example 5 | 97.6 | 94.3 | 91.5 | 87.1 | 95.4 | 97.0 |

(continued)

| | rate property (%) | | | low temperature (-7 °C) power property (%) | high temperature (60 °C) storage property (%) | capacity retention (%, 50cyc) |
|---|---|---|---|---|---|---|
| | 0.33C/0.1C | 1C/0.1C | 2C/0.1C | | | |
| Example 6 | 98.1 | 95.0 | 92.1 | 88.5 | 96.6 | 97.2 |
| Example 7 | 97.9 | 94.8 | 91.9 | 88.6 | 96.4 | 97.3 |
| Example 8 | 97.8 | 94.5 | 91.6 | 88.3 | 96.4 | 97.1 |
| Example 9 | 97.4 | 94.2 | 90.9 | 87.2 | 95.8 | 97.5 |
| Example 10 | 97.5 | 94.3 | 91.0 | 85.6 | 94.9 | 97.3 |
| Example 11 | 98.1 | 94.9 | 92.2 | 88.7 | 97.1 | 97.3 |
| Example 12 | 97.7 | 94.5 | 92.0 | 88.5 | 96.5 | 97.1 |
| Example 13 | 97.8 | 94.8 | 91.9 | 88.6 | 96.4 | 96.5 |
| Example 14 | 97.7 | 94.6 | 91.8 | 88.3 | 95.8 | 96.4 |
| Example 15 | 97.5 | 94.1 | 91.3 | 87.9 | 95.6 | 96.2 |
| Example 16 | 97.3 | 93.7 | 90.7 | 86.0 | 95.0 | 95.9 |
| Example 17 | 97.3 | 93.5 | 90.8 | 85.9 | 94.9 | 95.9 |
| Example 18 | 97.7 | 94.8 | 91.9 | 87.0 | 96.5 | 96.5 |
| Example 19 | 97.5 | 94.5 | 91.7 | 86.9 | 96.7 | 97.0 |
| Example 20 | 97.6 | 94.4 | 91.8 | 84.5 | 96.8 | 97.3 |
| Comparative Example 1 | 97.0 | 92.7 | 89.2 | 81.2 | 93.5 | 95.4 |
| Comparative Example 2 | 96.6 | 92.9 | 89.8 | 79.7 | 90.7 | 92.9 |
| Comparative Example 3 | 95.7 | 90.4 | 85.3 | 69.5 | 81.5 | 84.1 |
| Comparative Example 4 | 95.8 | 91.3 | 88.5 | 70.3 | 82.1 | 85.0 |

Referring to Tables 3 and 4, in Examples satisfying Equation 1, the initial capacity, the initial efficiency, the rate property, the low-temperature power property, the high-temperature storage property and the capacity retention were improved compared to those from Comparative Examples.

In Examples 4 and 5 where $M_{Mn}/(M_{Mn}+M_{Fc})$ in Formula 1 was not within a range of 0.5 to 0.7, the capacity property, the power property and the life-span property were relatively degraded compared to those form other Examples.

In Examples 9 and 10 where the doping element content was not within a range of 0.1 wt% to 1 wt% based on the weight of the lithium metal phosphate particles, the power property and the life-span property were relatively degraded compared to those from other Examples.

In Examples 16 and 17 where the crystallite size of the lithium metal phosphate particles in the (020) plane direction was not within a range of 175 nm to 600 nm, the capacity property, the power property and the life-span property were relatively degraded compared to those from other Examples.

**Claims**

1. A cathode active material for a lithium secondary battery, comprising a lithium metal phosphate particle the comprises manganese and iron, and satisfies Formula 1 below:

$(M_{Mn}/(M_{Mn}+M_{Fc}))*100-1 \leq$ manganese capacity expression rate (%) $\leq (M_{Mn}/(M_{Mn}+M_{Fc}))*100+1$     [Formula 1]

(In Formula 1, $M_{Mn}$ is a molar ratio of manganese among metals excluding lithium contained in the lithium metal phosphate particle, and $M_{Fc}$ is a molar ratio of iron among the metals excluding lithium contained in the lithium metal phosphate particle, and

the manganese capacity expression rate (%) is a value obtained by subtracting an SOC of a maximum height peak from 100 in a charge graph in which a state of charge (SOC) (%) is used as a horizontal axis and a value (dV/dQ) obtained by differentiating a voltage (V) by a charge capacity (mAh/g) as a vertical axis).

2. The cathode active material for a lithium secondary battery of claim 1, wherein $M_{Mn}/(M_{Mn}+M_{Fc})$ is in a range from 0.5 to 0.7.

3. The cathode active material for a lithium secondary battery of claim 1, wherein $M_{Fc}/(M_{Mn}+M_{Fc})$ is in a range from 0.3 to 0.5.

4. The cathode active material for a lithium secondary battery of claim 1, wherein the lithium metal phosphate particle satisfies Formula 2 below:

[Formula 2] $(M_{Mn}/(M_{Mn}+M_{Fc}))*100-0.5 \leq$ manganese capacity expression rate (%) $\leq (M_{Mn}/(M_{Mn}+M_{Fc}))*100+0.5$     [Formula 2]

(In Formula 2, $M_{Mn}$ is a molar ratio of manganese among metals excluding lithium contained in the lithium metal phosphate particle, and $M_{Fc}$ is a molar ratio of iron among the metals excluding lithium contained in the lithium metal phosphate particle, and

the manganese capacity expression rate (%) is a value obtained by subtracting an SOC of a maximum height peak from 100 in a charge graph in which a state of charge (SOC) (%) is used as a horizontal axis and a value (dV/dQ) obtained by differentiating a voltage (V) by a charge capacity (mAh/g) as a vertical axis).

5. The cathode active material for a lithium secondary battery of claim 1, wherein the lithium metal phosphate particle comprises a chemical structure or a crystal structure represented by Chemical Formula 1 below:

[Chemical Formula 1]         $Li_aMn_bFe_cP_dO_{4+c}$

(In Chemical Formula 1, $0.9 \leq a \leq 1.2$, $0.5 \leq b \leq 0.7$, $0.3 \leq c \leq 0.5$, $0.9 \leq d \leq 1.2$, and $-0.1 \leq e \leq 0.1$).

6. The cathode active material for a lithium secondary battery of claim 1, wherein the lithium metal phosphate particle further comprises a doping element or a coating element.

7. The cathode active material for a lithium secondary battery of claim 6, wherein the doping element or the coating element comprises at least one selected from the group consisting of Ti, V, Na, Mg, Ca, Y, Hf, Nb, Ta, Cr, Mo, W, Fe, Cu, Ag, Zn, B, Al, Ga, C, Si, Sn, Sr, Ba, Ra, P and Zr.

8. The cathode active material for a lithium secondary battery of claim 6, wherein a content of the doping element or the coating element is in a range from 0.1 wt% to 1 wt% based on a weight of the lithium metal phosphate particle.

9. The cathode active material for a lithium secondary battery of claim 1, wherein the lithium metal phosphate particle comprises a carbon coating formed on a surface portion.

10. The cathode active material for a lithium secondary battery of claim 1, wherein a crystallite size in a direction of a (020) plane of the lithium metal phosphate particle as measured by an X-ray diffraction (XRD) analysis is in a range from 175 nm to 600 nm.

11. The cathode active material for a lithium secondary battery of claim 10, wherein the crystallite size is measured using Formula 3 below:

[Formula 3]

$$L = \frac{0.9\lambda}{\beta cos\theta}$$

(In Formula 3, L is the crystallite size (nm), $\lambda$ is an X-ray wavelength (nm), $\beta$ is a full width at half maximum (rad) of a (020) plane peak of the lithium metal phosphate particle, and $\theta$ is a diffraction angle (rad)).

12. The cathode active material for a lithium secondary battery of claim 1, wherein the crystallite size is in a range from 200 nm to 400 nm.

13. A lithium secondary battery, comprising:

   a cathode comprising the cathode active material of claim 1; and
   an anode opposing the cathode.

## FIG. 1

## FIG. 2

## FIG. 3

### Charge Discharge Pofile

## FIG. 4

### Differential graph for LMFP charging profile

## INTERNATIONAL SEARCH REPORT

| International application No. |
| --- |
| **PCT/KR2024/011042** |

| **A.** | **CLASSIFICATION OF SUBJECT MATTER** |
| --- | --- |

**H01M 4/505**(2010.01)i; **H01M 4/525**(2010.01)i; **H01M 4/58**(2010.01)i; **H01M 4/36**(2006.01)i; **H01M 10/052**(2010.01)i; **H01M 4/02**(2006.01)i

According to International Patent Classification (IPC) or to both national classification and IPC

| **B.** | **FIELDS SEARCHED** |
| --- | --- |

Minimum documentation searched (classification system followed by classification symbols)

H01M 4/505(2010.01); C01B 25/45(2006.01); H01M 4/36(2006.01); H01M 4/58(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 망간(manganese, Mn), 철(iron, Fe), 인산화물(phosphate), 양극(cathode), 활물질 (active material), 코팅(coating), 결정립(grain), 이차전지(secondary battery)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | JP 2021-150081 A (SUMITOMO OSAKA CEMENT CO., LTD.) 27 September 2021 (2021-09-27)<br>See claims 1, 2, 4 and 5, and paragraphs [0010], [0014] and [0030]. | 1-13 |
| A | KR 10-2018-0002727 A (ELIIY POWER CO., LTD.) 08 January 2018 (2018-01-08)<br>See claims 1 and 4-6. | 1-13 |
| A | KR 10-2017-0098728 A (LG CHEM, LTD.) 30 August 2017 (2017-08-30)<br>See claims 1, 10 and 11. | 1-13 |
| A | JP 2023-041288 A (TAIHEIYO CEMENT CORP.) 24 March 2023 (2023-03-24)<br>See claims 1, 2 and 4. | 1-13 |
| A | JP 2020-043009 A (TAIHEIYO CEMENT CORP.) 19 March 2020 (2020-03-19)<br>See claims 1, 3 and 4. | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 November 2024** | **04 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/011042**

| Patent document cited in search report | | | Publication date (day/month/year) | Patent family member(s) | | | Publication date (day/month/year) |
|---|---|---|---|---|---|---|---|
| JP | 2021-150081 | A | 27 September 2021 | CA | 3094586 | A1 | 17 September 2021 |
| | | | | CA | 3094586 | C | 14 March 2023 |
| | | | | CN | 113054188 | A | 29 June 2021 |
| | | | | CN | 113054188 | B | 26 July 2022 |
| | | | | EP | 3883019 | A1 | 22 September 2021 |
| | | | | EP | 3883019 | B1 | 07 December 2022 |
| | | | | JP | 6841362 | B1 | 10 March 2021 |
| | | | | KR | 10-2021-0116181 | A | 27 September 2021 |
| | | | | KR | 10-2319302 | B1 | 29 October 2021 |
| | | | | US | 11228035 | B2 | 18 January 2022 |
| | | | | US | 2021-0296649 | A1 | 23 September 2021 |
| KR | 10-2018-0002727 | A | 08 January 2018 | CA | 2984096 | A1 | 10 November 2016 |
| | | | | CA | 2984096 | C | 07 March 2023 |
| | | | | CN | 107534145 | A | 02 January 2018 |
| | | | | EP | 3291343 | A1 | 07 March 2018 |
| | | | | EP | 3291343 | B1 | 27 July 2022 |
| | | | | JP | 6663091 | B2 | 11 March 2020 |
| | | | | US | 11211604 | B2 | 28 December 2021 |
| | | | | US | 2018-0151880 | A1 | 31 May 2018 |
| | | | | WO | 2016-178280 | A1 | 10 November 2016 |
| | | | | WO | 2016-178280 | A1 | 22 February 2018 |
| KR | 10-2017-0098728 | A | 30 August 2017 | None | | | |
| JP | 2023-041288 | A | 24 March 2023 | None | | | |
| JP | 2020-043009 | A | 19 March 2020 | JP | 7108504 | B2 | 28 July 2022 |

Form PCT/ISA/210 (patent family annex) (July 2022)